# EUROPEAN PATENT SPECIFICATION

(11) **EP 3 271 882 B1**
(45) Date of publication and mention of the grant of the patent: **08.05.2019**
(21) Application number: 16719502.3
(22) Date of filing: 16.03.2016
(51) Int. Cl.: G06Q 10/08, G01D 21/02, G06Q 50/28

(54) **DEVICE AND METHOD FOR MONITORING A LIQUID FOODSTUFF**
VORRICHTUNG UND VERFAHREN ZUR ÜBERWACHUNG EINES FLÜSSIGEN LEBENSMITTELS
DISPOSITIF ET PROCÉDÉ POUR SURVEILLER UN PRODUIT ALIMENTAIRE LIQUIDE

(30) Priority: 20.03.2015 IT BO20150142
(43) Date of publication of application: 24.01.2018
(73) Proprietor: Wenda S.r.L., 40013 Castel Maggiore (Bologna) (IT)
(72) Inventor: MONTERUMISI, Andrea, 40050 Monte San Pietro (Bologna) (IT); CATAPANO, Antonio, 40131 Bologna (IT)
(74) Representative: Conti, Marco
(86) International application number: PCT/IB2016/051472
(87) International publication number: WO 2016/151434

(56) References cited:
- EP-A1- 2 543 316
- WO-A1-2007/080526
- WO-A1-2008/086890
- CN-A- 1 587 914
- CN-U- 201 837 083
- CN-U- 202 617 081
- CN-U- 202 995 979

## Description

### Technical field

This invention relates to a device and a method for monitoring a liquid foodstuff.

### Background art

This invention addresses the sector of product identification and traceability, that is, means which allow verifying the history, movements and path followed by products, objects and goods in general.

This invention also addresses the sector of monitoring liquid foodstuffs. More specifically, this invention is advantageously applicable to the wine industry.

Liquid foodstuffs are perishable substances. The quality of a liquid foodstuff, especially in terms of taste and smell, is very closely connected with its correct preservation. One of the needs of the liquid foodstuffs sector involves monitoring the technical parameters which influence the state of preservation of a liquid.

It is well known that the agents which mostly influence the preservation (hence the quality) of a liquid foodstuff are temperature and exposure to electromagnetic radiation, in particular light radiation. Keeping a liquid foodstuff in an environment characterized by high temperature and/or high light intensity can accelerate the chemical and physical processes responsible for the deterioration of the liquid foodstuff.

It is therefore important that these parameters do not exceed predetermined values for extended periods of time, so as to prevent the liquid from deteriorating and the lowering of its quality.

This problem is particularly serious for liquid foodstuffs intended for the international market. Very often, during transportation, the environmental conditions a liquid foodstuff is subjected to (especially the conditions of temperature and light) do not satisfy the criteria necessary for the correct preservation of the liquid.

This can have serious consequences for the producer, both in strictly economic terms (in some cases, the economic burden of poor product quality is borne by the producer, despite the fact that the liquid foodstuff was in a good state of preservation prior to shipment) and in terms of image (when the container is opened, the product - in some cases very expensive - is of poor quality).

Another very serious problem is due to tampering with the container of the liquid foodstuff by ill-intentioned persons for the purpose of substituting a liquid foodstuff of high value with one of lesser value which looks the same.

To date, these problems remain unsolved.

### Disclosure of the invention

The aim of this invention is to provide a device for monitoring a liquid foodstuff contained in a bottle, to overcome the above mentioned disadvantages.

More specifically, the invention has for an aim to provide a particularly reliable and precise device for monitoring a liquid foodstuff.

A further aim of the invention is to propose a particularly effective and complete method for monitoring a liquid foodstuff.

These aims are fully achieved by the device and method of the invention, for monitoring a liquid foodstuff, as characterized in the appended claims.

It should be noted that the term "bottle" is used in this description to denote a generic container for liquid foodstuffs. Such container includes at least a body and a cap.

The device comprises a protective shell. In an example embodiment, the shell is shaped so it can be fastened to one end (or neck) of the bottle in proximity to a closing element (or cap) configured to prevent the liquid foodstuff from escaping. Preferably, the shell comprises a rear face, directed towards the bottle, and a front face directed in a direction opposite to that of the rear face.

In an example embodiment, the device comprises a fastening element configured to fasten the shell permanently to the bottle. In one embodiment, the fastening element is configured to connect the device to the body (more specifically, to the neck) of the bottle. In another example embodiment, the fastening element is configured to connect the device to the cap of the bottle.

Preferably, the fastening element comprises an annular element projecting from the rear face.

In an example embodiment, the fastening element is configured to cover the bottle cap to obstruct the handling thereof. In a preferred embodiment, the fastening element comprises a shutter element configured to prevent access to the cap.

It should be noted that this solution obstructs access to the cap with the intention of preventing tampering or replacing the liquid foodstuff contained in the bottle.

In an example embodiment, the device, once fastened, can be removed from the bottle by breaking the fastening element and/or the shell.

In an example embodiment, the device of this description includes at least one sensor configured to detect a physical parameter correlated with a physical state of the liquid inside the bottle the device is coupled to. The device might include two or more such sensors. For example, the sensor might be a temperature sensor, a light sensor or an inclination sensor.

In an example embodiment, the device comprises a temperature sensor housed in the shell and configured to measure a temperature parameter representing a temperature of an environment in which the bottle is located.

In an example embodiment, the device comprises a light sensor housed in the shell and configured to measure a light parameter representing an intensity of irradiation on the bottle.

In a further example embodiment, the device comprises an inclination sensor designed to measure an inclination parameter representing an inclination of the bottle relative to an absolute spatial reference.

It should be noted that the temperature, light and inclination sensors allow monitoring parameters which are important for correct preservation of the liquid foodstuff.

The device comprises a mass storage memory housed in the shell.

Preferably, the memory contains identification data which are uniquely correlated with the bottle and liquid foodstuff contained therein.

Preferably, the device is configured to be initialized (that is, assigned to the bottle) by recording in the memory a serial number of the bottle. If the bottle does not have a serial number associated with it, the device can be assigned to the bottle by applying a transponder to the bottle (for example, on a label of the bottle) and recording in the memory the transponder's identification number (or user identifier, UID).

The device comprises a processor housed in the shell and connected to the memory. Preferably, the processor is connected to the temperature, light and inclination sensors to receive values of the corresponding temperature, light and inclination parameters and record them in the memory.

It should be noted that this solution allows precise and complete monitoring.

In an example embodiment, the device comprises a power supply battery housed in the shell. Preferably, the device comprises an indicator element configured to indicate the battery charge level. In a preferred embodiment, the indicator element is a light emitting diode.

It should also be noted that this solution makes monitoring particularly reliable.

In an example embodiment, the device comprises at least one antenna connected to the processor and configured to exchange data by wireless input and output signals to and from the device. Preferably, the antenna is configured to operate with Near Field Communication (NFC) technology. In other example embodiments, the device may be provided with communication ports and data exchange, either wired or wireless, by means of a USB, Bluetooth or other interface.

It should be noted that this solution allows transferring data contained in the memory to a device having a screen, to display the data and monitor the environmental conditions under which the bottle and the liquid foodstuff contained therein have been stored.

In an example embodiment, the device is configured to transmit data to the outside in protected mode. For example, the processor of the device is configured to protect with a cryptographic key (that is, to encrypt) the data to be transferred to the outside. That way, using an electronic appliance external of the device (for example, a computer, a tablet or a smartphone), the user cannot access the data content unless they are in possession of the cryptographic key of the device (which generated the encrypted data).

In an example embodiment, the device comprises an activating element connected to the processor to enable or disable operation of the temperature sensor, of the light sensor, and/or of the inclination sensor. Preferably, the activating element is movable between an activated position and a deactivated position.

In an example embodiment, when the device is coupled to the bottle, the activating element is forced into the activated position in which it enables operation of the device.

In an example embodiment, the activating element comprises a retractable pushbutton protruding from the rear face of the shell in the deactivated position and an elastic element configured to keep the activating element in the extracted configuration (that is, in the deactivated position) when the device is not fastened to the bottle.

In an example embodiment, the device comprises an anti-tamper sensor connected to the activating element and configured to generate an alarm signal when the activating element switches from the activated position to the deactivated position.

In an example embodiment, fastening the device to the bottle initializes the anti-tamper sensor. Preferably, the anti-tamper sensor is disabled by a disabling command. Preferably, the disabling command is a radio frequency disabling signal.

It should be noted that this solution allows the device to provide warning of attempts to tamper with the bottle, with the liquid foodstuff and/or with the device.

It should be noted that, in the absence of a constraint external of the device and operating thereon to force it into the activated position, the activating element is positioned in the deactivated position (this is obtained, for example, by means of a spring or a magnet or other systems adapted to bias the activating element towards the deactivated position). When the device is coupled to the bottle, the constraint is constituted by the bottle itself.

In an example embodiment, the processor is programmed to detect a movement of the activating element from the activated to the deactivated position. Preferably, the processor is programmed to store and/or transmit to the outside data indicating that the activating element has moved from the activated to the deactivated position.

It should be noted the processor is programmed to define an activated state and a deactivated state and to set the device to the activated or deactivated state in response, respectively, to an activation or deactivation signal received from the processor itself.

For example, the activation or deactivation signal is a wireless signal (preferably digital) transmitted by an external appliance (for example through the antenna). In another embodiment, the activation or deactivation signal is transmitted by mechanical means included in the device and designed to be operated by an external tool (for example, a special tool).

With regard to the method according to this description, for monitoring a liquid foodstuff contained in a bottle, the following should be noted.

In an example embodiment, the device is activated (that is, initialized) by the processor of the device in response to an activation signal.

Similarly, in an example embodiment, the processor deactivates the device in response to a deactivation signal.

Activation and deactivation occur via software, inside the device, in response to signals received from outside the device.

In an example embodiment, the method comprises a step of detecting the activated or deactivated position of the activating element.

In an example embodiment, when the device is activated, detection of the activating element moving from the activated to the deactivated position causes an alarm to be generated.

In an example embodiment, when the device is deactivated, the activating element can be moved from the activated to the deactivated position or vice versa without causing any alarm to be generated.

Preferably, deactivating the device means interrupting the acquisition of the parameters detected by the sensor.

In an example embodiment, the processor proceeds to activation in response to the activation signal only if the activating element is in the activated position, otherwise an error signal is given.

In an example embodiment, when the device is correctly coupled to the bottle, the activating element is in the activated position and at least part of the device is operatively connected to the cap. Opening the bottle is impossible without moving the activating element into the deactivated position.

In an example embodiment, when the device is correctly coupled to the bottle, at least part of the device is operatively connected to the cap, so the device prevents the bottle from being opened and opening the bottle is possible only after removing the device.

In an example embodiment, the device comprises a serial port configured to connect external devices which are not housed in the shell.

In an example embodiment, the processor is configured to receive values of a location parameter representing the geographical position of the device and to record it in the memory. In an example embodiment, the device is connected to a locating sensor through the serial port.

It should be noted that this solution allows tracing the device and the bottle it is fastened to.

In a further example embodiment, the device is connected to an external NFC antenna through the serial port. Preferably, the device comprises a power supply circuit housed in the shell and connectable though the serial port to an external NFC antenna to receive electrical power through a radio frequency signal and to electrically power the processor, the temperature sensor, the light sensor and/or the battery.

It should be noted that this solution is particularly advantageous if used for fixed installations (for example wineries) where it is possible to power in parallel a plurality of devices fastened to respective bottles.

A further aim of this description is to propose a method for monitoring a liquid foodstuff contained in a bottle, comprising the following steps:
- preparing a device which can be permanently coupled to a bottle and fastening the device to the bottle to be monitored;
- setting up the device to establish a unique association of the device with the bottle by recording an identification code in a memory of the device;
- acquiring temperature and light parameters respectively representing a temperature of an environment in which the bottle is located and an intensity of irradiation on the bottle;
- saving the temperature and light parameters in the memory;
- approaching a portable electronic appliance, configured to exchange data with the device through wireless signals;
- displaying the parameters saved in the memory on a screen of the portable electronic appliance.

In an example embodiment, the portable electronic appliance is a smartphone or a tablet. It should be noted that this solution allows effective and complete monitoring.

In an example embodiment, the step of setting up the device comprises a step of recording a bottle serial number in the memory of the device. If the bottle does not have a serial number, the step of setting up the device comprises a step of applying a transponder to the bottle and recording the transponder's identification number in the memory of the device.

In an example embodiment, the step of saving the parameters comprises a further step of:
- preparing a computer server;
- transferring the data contained in the memory of the monitoring device to the computer server.

It should be noted that this solution allows making more space available for saving the parameters monitored by means of the device.

A further aim of this description is to propose a computer server having a central memory forming a database relating to a liquid foodstuff contained in a bottle. The bottle can be coupled to a respective monitoring device which is uniquely associated with the bottle. Preferably, the device is identified by an identification code. In an example embodiment, the database comprises a plurality of registers which are uniquely associated with a corresponding identification code. Each register comprises one or more data sets relating to the corresponding bottle equipped with device, belonging to one or more categories included in the following list:
- data relating to the liquid foodstuff contained in the bottle;
- data relating to a producer and a process for producing the liquid foodstuff contained in the bottle;
- data transferred from a memory of the monitoring device.

A further aim of this description is to propose a method for retrieving information about a liquid foodstuff contained in a bottle, comprising the following steps:
- detecting, by means of a portable electronic appliance, a monitoring device fastened to the bottle and configured to transfer short-range data;
- identifying the monitoring device by reading an identification code of the bottle by means of the portable electronic appliance;
- retrieving data recorded in a memory on board the device;
- connecting to a remote computer server having a central memory forming a database, wherein the database comprises a plurality of registers uniquely associated with a corresponding identification code, and wherein each register comprises information relating to the corresponding bottle equipped with device;
- retrieving, from the computer server, information relating to the bottle equipped with device;
- displaying the data retrieved from the memory of the device and/or from the central memory of the computer server, on a screen of the portable electronic appliance.

It should be noted that this solution allows both monitoring the environmental conditions in which the bottle is stored and associating with the bottle full information regarding producer, locations and production processes of the liquid foodstuff contained therein.

A further aim of this description is to provide a computer program comprising software for performing the steps of a method for retrieving information about a liquid foodstuff contained in a bottle, when the program is run on a portable electronic appliance such as a smartphone or tablet. A further aim of this invention is to provide a data storage device readable by a computer, or a flow of data transferable to the computer, containing the computer program.

This description also provides a device for monitoring a liquid foodstuff contained in a bottle in order to automatically detect unauthorized tampering with, or attempted access to, the bottle itself.

The device comprises:
- a protective shell;
- a fastening element configured to fasten the shell permanently to the bottle;
- a power supply battery housed in the shell;
- a processor housed in the shell and connected to the memory (for example also housed in the shell);
- at least one antenna connected to the processor and configured to exchange data (for example wirelessly) by input and output signals to and from the device.

The device also comprises a sensor configured to detect the presence of a device coupled to the bottle.

For example, the sensor is connected to an activating element. The activating element is configured to interact with the bottle and to switch between an activated configuration (or operating position) and a deactivated configuration (or operating position). When the device is coupled to the bottle, the activating element is forced into the activated position. If the device is disconnected (uncoupled) from the bottle, the activating element automatically switches to the deactivated configuration. Preferably, the activating element is connected to the processor which is programmed to detect its operating configuration.

In an example embodiment, the activating element may be a mechanical element configured to interact with the bottle and movable between an activated position and a deactivated position. In an example embodiment, the activating element may be an electrical or optical element to switch between the activated configuration and the deactivated configuration (for example by making or breaking an electrical circuit or optical path).

In an example embodiment, the device is operatively connected to the bottle cap. For example, the activating element operates on the cap so that when the device is coupled to the cap and the cap is coupled to and closes the bottle, the activating element is in the activated configuration. When the cap is disconnected from the bottle (to open the bottle), the activating element automatically switches to the deactivated configuration. The processor is connected to the sensor and is programmed to transmit to the outside a signal which indicates tampering with the cap or access or attempted access to the bottle.

The sensor is, for example, an anti-tamper sensor connected to the activating element and configured to generate an alarm signal when the activating element switches from the activated position to the deactivated position.

In an example embodiment, fastening the device to the bottle initializes the anti-tamper sensor. Preferably, the anti-tamper sensor is disabled by a disabling command. Preferably, the disabling command is a radio frequency disabling signal.

This description also provides a cap comprising a device according to one or more of the embodiments described above.

For example, the cap may be a cap designed to be connected to the neck of the bottle by screwing and/or by plastic deformation of an edge of the cap.

### Brief description of the drawings

This and other features of the invention will become more apparent from the following description of a preferred embodiment of it, illustrated purely by way of example in the accompanying drawings, in which:

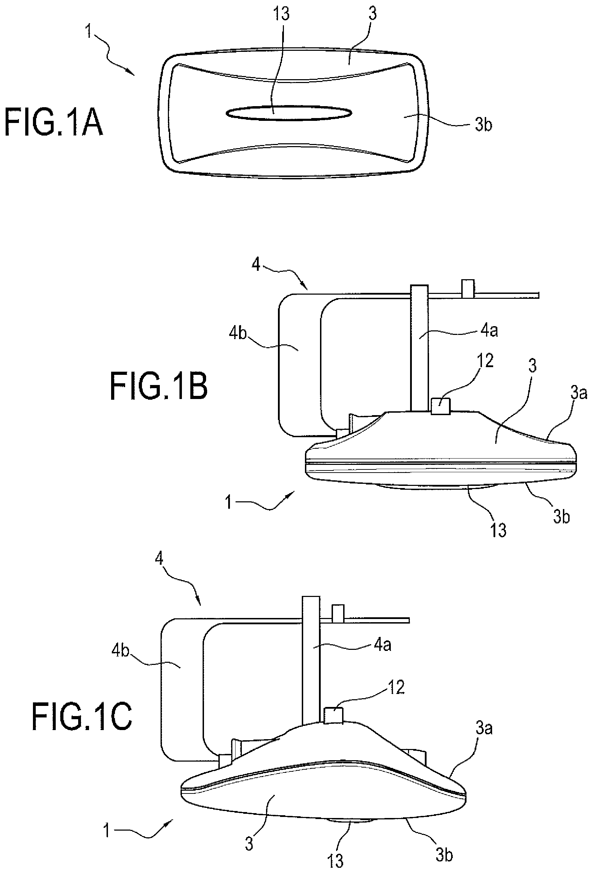

- Figure 1A is a front view showing a device for monitoring a liquid foodstuff according to this description;
- Figure 1B shows the device of Figure 1A in a side view;
- Figure 1C is a side view showing a variant embodiment of a device for monitoring a liquid foodstuff according to this description;

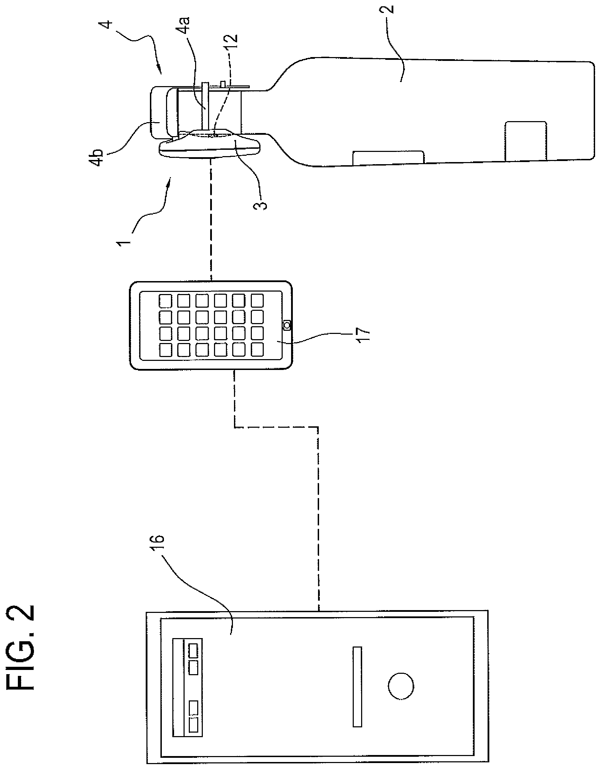

- Figure 2 schematically represents the operation of the device of Figure 1A;

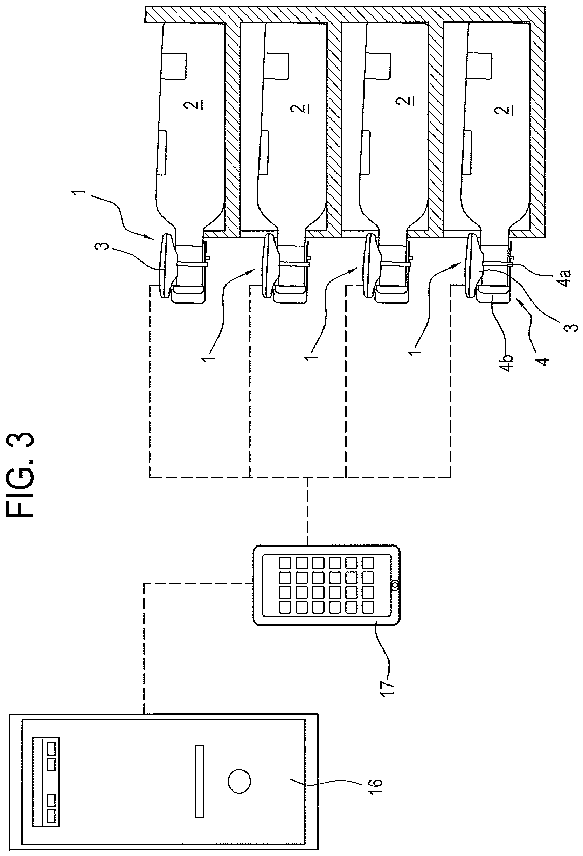

- Figure 3 schematically represents the operation of a variant embodiment of the device of Figure 1A;

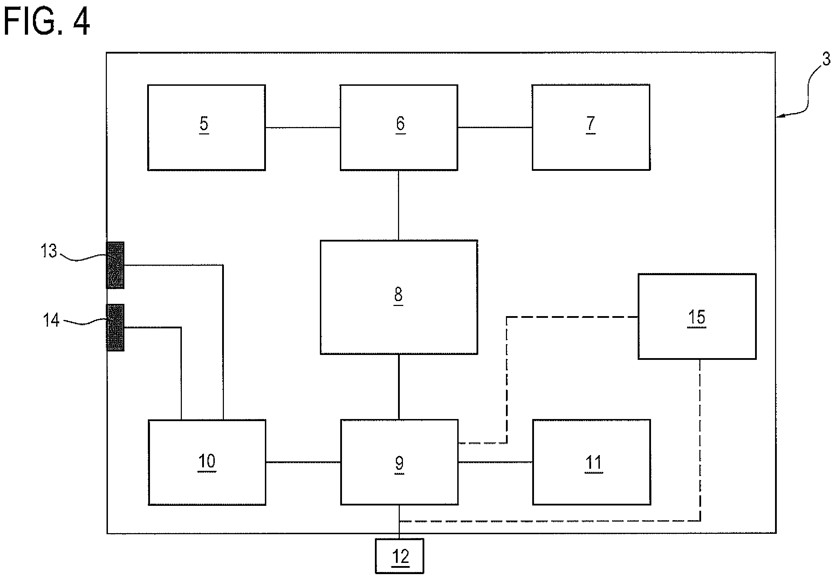

- Figure 4 shows a block diagram representing the components of the device of Figure 1A housed in the shell, according to this description;

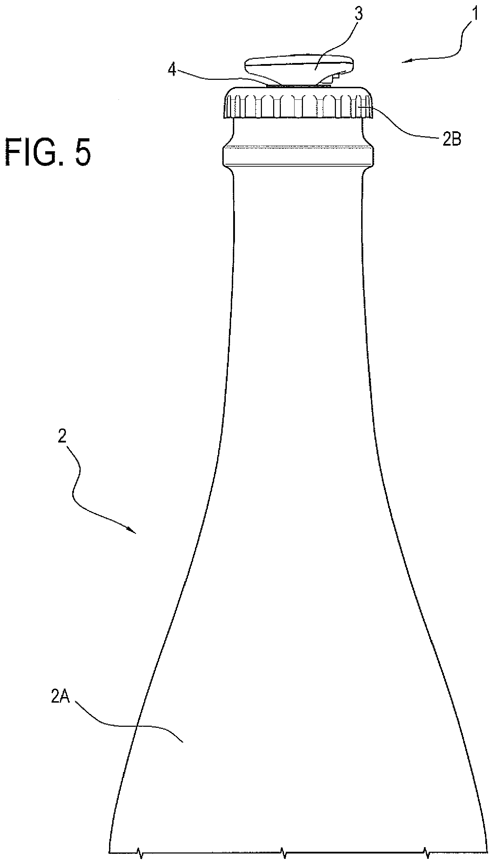

- Figure 5 shows a variant embodiment of the device of Figures 1.

### Detailed description of preferred embodiments of the invention

With reference to the accompanying drawings, the numeral 1 denotes a device for monitoring a liquid foodstuff contained in a bottle 2.

It should be noted that the term "bottle 2" is used in this description to denote a generic container for liquid foodstuffs.

The device 1 comprises a protective shell 3. Preferably, the shell 3 is shaped so it can be attached to one end (or neck) of the bottle 2 in proximity to a closing element (or cap) configured to be coupled to the bottle neck to prevent the liquid foodstuff from escaping.

Still more preferably, the shell 3 comprises a rear face 3a, directed towards the bottle 2, and a front face 3b directed in a direction opposite to that of the rear face 3a. In an example embodiment, the rear face 3a of the shell 3 defines a portion of cylindrical surface which is shaped to match the neck of the bottle 2. That way, the rear face 3a of the shell 3 adheres to an outside wall of the bottle 2 when the device 1 is fastened to the bottle 2.

In an example embodiment, the device 1 comprises a fastening element 4 configured to fasten the shell 3 permanently to the bottle 2. Preferably, the fastening element 4 comprises an annular element 4a projecting from the rear face 3a. Still more preferably, the fastening element 4 is configured to cover the cap of the bottle 2 to obstruct the handling thereof. In a preferred embodiment, the fastening element 4 comprises a shutter element 4b configured to prevent access to the cap.

Preferably, the device 1, once fastened, can be removed from the bottle 2 by breaking the fastening element 4 and/or the shell 3.

In an example embodiment, the device 1 comprises a temperature sensor 5 housed in the shell 3 and configured to measure a temperature parameter representing a temperature of an environment in which the bottle 2 is located. Preferably, the temperature sensor 5 is an integrated circuit sensor configured to provide a voltage signal representing a temperature value.

Preferably, the device 1 comprises a light sensor 6 housed in the shell 3 and configured to measure a light parameter representing an intensity of irradiation on the bottle 2. Preferably, the light sensor 6 is configured to operate at a frequency of between 300 GHz (corresponding to infrared radiation) and 10 PHz (corresponding to ultraviolet radiation). In an example embodiment, the light sensor 6 is a photodiode sensor.

Still more preferably, the device 1 comprises an inclination sensor 7 configured to measure an inclination parameter representing an inclination of the bottle 2 relative to an absolute spatial reference. In an example embodiment, the inclination sensor 7 comprises a circuit provided with a switch which is movable between an open configuration and a closed configuration as a function of an inclination relative to an absolute spatial reference.

The device 1 comprises a mass storage memory 8 housed in the shell 3.

Preferably, the memory 8 contains identification data which are uniquely correlated with the bottle 2 and with the liquid foodstuff contained therein.

Preferably, the device 1 is configured to be initialized (that is, assigned to the bottle 2) by recording in the memory 8 a serial number of the bottle 2. If the bottle 2 does not have a serial number associated with it, the device 1 can be assigned to the bottle 2 by applying a transponder to the bottle 2 (for example, on a label of the bottle 2) and recording in the memory 8 the transponder's identification number (or user identifier, UID).

The device 1 comprises a processor 9 housed in the shell 3 and connected to the memory 8. Preferably, the processor 9 is a 16-bit processor.

Preferably, the processor 9 is connected to the temperature sensor 5, light sensor 6 and inclination sensor 7 to receive values of the corresponding temperature, light and inclination parameters and record them in the memory 8.

In an example embodiment, the device 1 comprises a power supply battery 10 housed in the shell 3. Preferably, the battery 10 has a nominal voltage of between 1 V and 12 V and is configured to electrically power the components of the device 1 housed in the shell 3. Still more preferably, the device 1 comprises an indicator element configured to indicate the charge level of the battery 10. In a preferred embodiment, the indicator element is a light emitting diode 13 mounted on the front face 3b of the device 1.

In an example embodiment, the device 1 comprises at least one antenna 11 connected to the processor 9 and configured to exchange data by wireless input and output signals to and from the device 1. Preferably, the antenna 11 is configured to operate at a frequency of between 3 kHz and 300 GHz (that is, radio frequency). Still more preferably, the antenna 11 is configured to operate with Near Field Communication (NFC) technology.

Preferably, the antenna 11 is configured to communicate data in response to a predetermined polling signal.

Preferably, the device 1 comprises an activating element 12 connected to the processor 9 to enable or disable operation of the temperature sensor 5, of the light sensor 6, and/or of the inclination sensor 7. Preferably, the activating element 12 is movable between an activated position and a deactivated position.

In an example embodiment, when the device 1 is coupled to the bottle 2, the activating element 12 is forced into the activated position in which it enables operation of the device 1 (that is, of the sensors of the device 1).

In an example embodiment, the activating element 12 comprises a retractable pushbutton protruding from the rear face 3a of the shell 3 in the deactivated position and an elastic element configured to keep the activating element 12 in the extracted configuration (that is, in the deactivated position) when the device 1 is not fastened to the bottle 2.

Preferably, the retractable tooth is shaped to hinder tampering attempts.

In an example embodiment, the device 1 comprises an anti-tamper sensor 15 connected to the activating element 12 and configured to generate an alarm signal when the activating element 12 switches from the activated position to the deactivated position. Preferably, the alarm signal is recorded in the memory 8 of the device 1 (for example, it contains data indicating the time and place in which the device 1 was uncoupled from the device 2).

Preferably, fastening the device 1 to the bottle 2 causes the activating element 12 to switch from the deactivated position to the activated position and simultaneously initializes the anti-tamper sensor 15. Preferably, the anti-tamper sensor 15 can be disabled by a wireless disabling command (that is, by a disabling signal, preferably at radio frequency).

In an example embodiment, the device 1 comprises a serial port 14 configured to connect external devices which are not housed in the shell 3.

Preferably, the processor 9 is configured to receive values of a location parameter representing the geographical position of the device 1 and to record it in the memory 8. In an example embodiment, the device 1 is connected to a locating sensor through the serial port 14.

In a further example embodiment, the device 1 is connected to an external NFC antenna through the serial port 14. Preferably, the device 1 comprises a power supply circuit housed in the shell 3 and connectable though the serial port 14 to an external NFC antenna to receive electrical power through a radio frequency signal and to electrically power the processor, the temperature sensor, the light sensor and/or the battery.

In an example embodiment, a plurality of devices 1 coupled to corresponding bottles 2, are connected through respective serial ports 14 to define a local network of devices.

Preferably, the device 1 is configured to adopt an operating configuration and a rest (or standby) configuration. In the operating configuration, the processor 9 receives temperature and light parameters from the temperature sensor 5 and light sensor 6 and records them in the memory 8. Preferably, the device 1, in the operating configuration, is also enabled to transfer data which is stored in the memory 8.

Preferably, the device 1 switches from the standby configuration to the operating configuration at predetermined time intervals (for example, an hour) to measure the temperature and light parameters and record them in the memory 8. Preferably, the device 1 switches from the standby configuration to the operating configuration in response to a predetermined polling signal received from the antenna 11.

Preferably, the memory 8 and/or the processor 9 are configured to prevent deleting the memory 8 or modifying data contained in the memory 8 in the event of tampering with the device 1.

It should be noted that this description provides a method for monitoring a liquid foodstuff contained in a bottle 2, comprising the following steps:
- preparing a device 1 which can be permanently coupled to a bottle 2 and fastening the device 1 to the bottle 2 to be monitored;
- setting up the device 1 to establish a unique association of the device 1 with the bottle 2;
- acquiring temperature and light parameters respectively representing a temperature of an environment in which the bottle 2 is located and an intensity of irradiation on the bottle 2;
- saving the temperature and light parameters in a memory 8;
- approaching a portable electronic appliance 17 configured to exchange data with the device 1 through wireless signals;
- displaying the parameters saved in the memory 8 on a screen of the portable electronic appliance 17.

In an example embodiment, the portable electronic appliance 17 is a smartphone or a tablet.

Preferably, the step of setting up the device 1 comprises a step of recording a serial number of the bottle 2 in the memory 8 of the device 1. If the bottle 2 does not have a serial number, the step of setting up the device 1 comprises a step of applying a transponder to the bottle 2 and recording the transponder's identification number in the memory 8 of the device 1.

The portable electronic appliance 17 is configured to issue a polling signal and to activate data transfer from the memory 8 of the device 1.

Preferably, the step of approaching a portable electronic appliance 17 comprises a step of:
- identifying the device 1 by retrieving from the memory 8 the bottle's serial number or the transponder's identification number.

In other words, the device 1 communicates its identification number to the portable electronic appliance 17, which identifies the device 1 detected.

Preferably, the transfer of data between the device 1 and the portable electronic appliance 17 occurs through an encrypted communication protocol. Preferably, the data transferred from the device 1 to the portable electronic appliance 17 are encrypted.

Preferably, the device 1 is configured to receive a wireless reset signal. In an example embodiment, receiving the reset signal by the device 1 entails deleting data from the memory 8.

It should be noted that this operation allows preparing the device 1 to be set up again (that is, associated with a bottle again).

Preferably, the step of saving the parameters comprises a further step of:
- preparing a computer server 16 having a central memory;
- transferring the data contained in the memory 8 of the monitoring device to the central memory of the computer server 16.

A further aim of this description is to propose a computer server 16 having a central memory forming a database relating to a liquid foodstuff contained in a bottle 2. The bottle 2 can be coupled to a respective monitoring device 1 which is uniquely associated with the bottle 2.

Preferably, the device 1 is identified by an identification code. In an example embodiment, the database comprises a plurality of registers which are uniquely associated with a corresponding identification code.

Each register comprises one or more data sets relating to the corresponding bottle 2 equipped with device 1, belonging to one or more categories included in the following list:
- data relating to the liquid foodstuff contained in the bottle 2;
- data relating to a producer and a process for producing the liquid foodstuff contained in the bottle 2;
- data transferred from a memory 8 of the monitoring device 1.

In an example embodiment, the data base stored in the central memory of the computer server 16 contains one or more of the following types of data:
- data relating to a name of a producer of the liquid foodstuff;
- data relating to a classification (or designation) of the liquid foodstuff;
- data relating to a type of bottle 2 (or container);
- data relating to a process and a place of production of the liquid foodstuff;
- data relating to identification numbers of devices 1 associated with respective bottles 2.

A further aim of this description is to propose a method for retrieving information about a liquid foodstuff contained in a bottle 2, comprising the following steps:
- detecting, by means of a portable electronic appliance 17, a monitoring device 1 fastened to the bottle 2 and configured to transfer short-range data;
- identifying the monitoring device 1 by reading an identification code of the bottle 2 by means of the portable electronic appliance 17;
- retrieving data recorded in a memory 8 on board the device 1;
- connecting to a remote computer server 16 having a central memory forming a database, wherein the database comprises a plurality of registers uniquely associated with a corresponding identification code, and wherein each register comprises information relating to the corresponding bottle equipped with device 1;
- retrieving, from the computer server 16, information relating to the bottle 2 equipped with device 1;
- displaying the data retrieved from the memory 8 of the device and/or from the central memory of the computer server 16, on a screen of the portable electronic appliance 17.

Preferably, the step of connecting to a computer server 16 comprises a step of authenticating the portable electronic appliance 17. Preferably, the step of connecting to a computer server 16 comprises a step of authenticating a user.

Preferably, the step of connecting to a computer server 16 comprises a step of generating and authenticating a user profile.

Preferably, the step of retrieving, from the computer server 16, information relating to the bottle 2 comprises a step of processing the information contained in the data base and transferring multimedia contents (for example, images, music and/or videos) from the computer server 16 to the portable electronic appliance 17.

A further aim of this description is to provide a computer program comprising software for performing the steps of a method for retrieving information about a liquid foodstuff contained in a bottle 2, when the program is run on a portable electronic appliance (for example, a smartphone or tablet). A further aim of this invention is to provide a data storage device readable by a computer, or a flow of data transferable to the computer, containing the computer program.

## Claims

1. A device (1) for monitoring a liquid foodstuff contained in a bottle (2), comprising:
- a protective shell (3);
- a fastening element (4) configured to fasten the shell (3) permanently to the bottle (2);
- a temperature sensor (5) housed in the shell (3) and configured to measure a temperature parameter representing a temperature of an environment in which the bottle (2) is located;
- a light sensor (6) housed in the shell (3) and configured to measure a light parameter representing an intensity of irradiation on the bottle (2);
- a power supply battery (10) housed in the shell (3);
- a mass storage memory (8) housed in the shell (3);
- a processor (9) housed in the shell (3) and connected to the memory (8), to the temperature sensor (5) and to the light sensor (6), to receive values of the temperature and light parameters and to record them in the memory (8);
- at least one antenna (11) connected to the processor (9) and configured to exchange data by wireless input and output signals to and from the device (1).

2. The device (1) according to claim 1, comprising an activating element (12) configured to interact with the bottle (2) and movable between an activated position and a deactivated position, so that when the device (1) is coupled to the bottle (2), the activating element is forced into the activated position, and wherein the activating element (12) is connected to the processor (9).

3. The device (1) according to claim 2, wherein the processor is configured to enable or disable operation of the temperature sensor (5) and of the light sensor (6) as a function of the position of the activating element (12).

4. The device (1) according to claim 2 or 3, wherein the protective shell (3) has a rear wall (3a) which is operatively in contact with the bottle (2) when the device (1) is anchored to the bottle (2), and wherein the activating element (12) comprises a retractable pushbutton protruding from the rear face (3a) in the deactivated position and an elastic element configured to keep the activating element (12) in the deactivated position when the device (1) is not anchored to the bottle (2).

5. The device (1) according to any one of claims 2 to 4, comprising an anti-tamper sensor (15) configured to generate an alarm signal when the activating element (12) switches from the activated position to the deactivated position.

6. The device (1) according to any one of claims 2 to 5, wherein, in the absence of a constraint external of the device and operating thereon to force it into the activated position, the activating element (12) is positioned in the deactivated position, and wherein such constraint is constituted by the bottle (2) itself when the device (1) is coupled to the bottle.

7. The device (1) according to any one of claims 2 to 6, wherein the processor (9) is programmed to detect a movement of the activating element (12) from the activated to the deactivated position.

8. The device (1) according to any one of the preceding claims, wherein the processor (9) is programmed to define an activated state and a deactivated state and to set the device to the activated or deactivated state in response, respectively, to an activation or deactivation signal received from the processor itself.

9. The device (1) according to any one of the preceding claims, wherein the mass storage memory (8) contains identification data uniquely correlated with the bottle (2) and with the liquid foodstuff contained therein.

10. The device (1) according to any one of the preceding claims, wherein the at least one antenna (11) is designed to communicate short-range data with Near Field Communication technology in response to a predetermined polling signal.

11. The device (1) according to any one of the preceding claims, comprising a power supply circuit housed in the shell (3) and connectable through a serial port (14) to an external NFC antenna to receive electrical power through a radio frequency signal and to electrically power the processor (9), the temperature sensor (5), the light sensor (6) and/or the battery (10).

12. The device (1) according to any one of the preceding claims, comprising an inclination sensor (7) designed to measure an inclination parameter representing an inclination of the bottle (2) relative to an absolute spatial reference.

13. The device (1) according to any one of the preceding claims, wherein the fastening element (4) is configured to cover a cap of the bottle (2) and prevent the bottle from being opened without first removing the device (1).

14. A method for monitoring a liquid foodstuff contained in a bottle (2), comprising the following steps:
- preparing a device (1) which can be permanently coupled to a bottle (2) and connecting the device (1) to the bottle (2) to be monitored;
- setting up the device (1) to establish a unique association of the device (1) with the bottle (2) by recording an identification code in a memory (8) of the device (1);
- acquiring temperature and light parameters respectively representing a temperature of an environment in which the bottle (2) is located and an intensity of irradiation on the bottle (2), wherein said temperature and light parameters are acquired through a temperature sensor (5) and a light sensor (6) included in the device (1), respectively;
- saving the temperature and light parameters in the memory (8);
- approaching a portable electronic appliance (17), configured to exchange data with the device (1) through wireless signals;
- transmitting, through an antenna (11) included in the device (1), data representing the temperature and light parameters to the portable electronic appliance (17).

15. A bottle cap comprising a device (1) according to one or more of the claims from 1 to 13, operatively connected to a wall of the cap itself.

## Patentansprüche

1. Vorrichtung (1) zur Überwachung eines flüssigen Lebensmittels, das in einer Flasche (2) enthalten ist, umfassend:
- eine Schutzhülle (3);
- ein Befestigungselement (4), das ausgelegt ist, um die Hülle (3) dauerhaft an der Flasche (2) zu befestigen;
- einen Temperatursensor (5), der in der Hülle (3) untergebracht und ausgelegt ist, um einen Temperaturparameter zu messen, der eine Temperatur einer Umgebung repräsentiert, in der die Flasche (2) angeordnet ist;
- einen Lichtsensor (6), der in der Hülle (3) untergebracht und ausgelegt ist, um einen Lichtparameter zu messen, der eine Strahlungsstärke auf die Flasche (2) repräsentiert;
- eine Stromversorgungsbatterie (10), die in der Hülle (3) untergebracht ist;
- einen Massenspeicher (8), der in der Hülle (3) untergebracht ist;
- einen Prozessor (9), der in der Hülle (3) untergebracht und mit dem Speicher (8), dem Temperatursensor (5) und dem Lichtsensor (6) verbunden ist, um Werte der Temperatur- und Lichtparameter zu erhalten und diese im Speicher (8) aufzuzeichnen;
- mindestens eine Antenne (11), die mit dem Prozessor (9) verbunden und ausgelegt ist, um Daten durch drahtlose Eingangs- und Ausgangssignale zur und von der Vorrichtung (1) auszutauschen.

2. Vorrichtung (1) nach Anspruch 1, umfassend ein Aktivierungselement (12), das ausgelegt ist, um mit der Flasche (2) zu interagieren und das zwischen einer aktivierten Position und einer deaktivierten Position bewegbar ist, sodass das Aktivierungselement in die aktivierte Position forciert wird, wenn die Vorrichtung (1) mit der Flasche (2) gekuppelt ist, wobei das Aktivierungselement (12) mit dem Prozessor (9) verbunden ist.

3. Vorrichtung (1) nach Anspruch 2, wobei der Prozessor ausgelegt ist, um den Betrieb des Temperatursensors (5) und des Lichtsensors (6) als eine Funktion der Position des Aktivierungselements (12) zu aktivieren oder zu deaktivieren.

4. Vorrichtung (1) nach Anspruch 2 oder 3, wobei die Schutzhülle (3) eine rückseitige Wand (3a) aufweist, die betriebswirksam in Kontakt mit der Flasche (2) ist, wenn die Vorrichtung (1) an der Flasche (2) verankert ist, und wobei das Aktivierungselement (12) einen einfahrbaren Druckknopf umfasst, der aus der rückseitigen Seitenfläche (3a) in der deaktivierten Position hervorsteht, und ein elastisches Element, das ausgelegt ist, um das Aktivierungselement (12) in der deaktivierten Position beizubehalten, wenn die Vorrichtung (1) nicht an der Flasche (2) verankert ist.

5. Vorrichtung (1) nach einem der Ansprüche 2 bis 4, umfassend einen Manipulationssicherungssensor (15), der ausgelegt ist, um ein Alarmsignal zu generieren, wenn das Aktivierungselement (12) aus der aktivierten Position in die deaktivierte Position wechselt.

6. Vorrichtung (1) nach einem der Ansprüche 2 bis 5, wobei das Aktivierungselement (12) in Abwesenheit einer auf die Vorrichtung einwirkenden Hemmung von außen, die diese in die aktivierte Position forciert, in der deaktivierten Position positioniert ist, und wobei diese Hemmung durch die Flasche (2) dargestellt ist, wenn die Vorrichtung (1) mit der Flasche gekuppelt ist.

7. Vorrichtung (1) nach einem der Ansprüche 2 bis 6, wobei der Prozessor (9) programmiert ist, um eine Bewegung des Aktivierungselements (12) aus der aktivierten in die deaktivierte Position zu erfassen.

8. Vorrichtung (1) nach einem der vorhergehenden Ansprüche, wobei der Prozessor (9) programmiert ist, um einen aktivierten Zustand und einen deaktivierten Zustand zu definieren und die Vorrichtung in den aktivierten oder deaktivierten Zustand zu versetzen, jeweils als Reaktion auf ein Aktivierungs- oder Deaktivierungssignal, das vom Prozessor empfangen wird.

9. Vorrichtung (1) nach einem der vorhergehenden Ansprüche, wobei der Massenspeicher (8) Identifizierungsdaten enthält, die ausschließlich mit der Flasche (2) und mit dem darin enthaltenen flüssigen Nahrungsmittel verknüpft sind.

10. Vorrichtung (1) nach einem der vorhergehenden Ansprüche, wobei die mindestens eine Antenne (11) ausgestaltet ist, um Nahbereichsdaten mit einer Nahfeldkommunikationstechnik als Reaktion auf ein vorgegebenes Polling-Signal zu übermitteln.

11. Vorrichtung (1) nach einem der vorhergehenden Ansprüche, umfassend einen Stromversorgungskreis, der in der Hülle (3) untergebracht ist und über einen seriellen Port (14) an eine externe NFC-Antenne angeschlossen werden kann, um Strom über ein Funkfrequenzsignal zu empfangen und den Prozessor (9), den Temperatursensor (5), den Lichtsensor (6) und/oder die Batterie (10) mit Strom zu versorgen.

12. Vorrichtung (1) nach einem der vorhergehenden Ansprüche, umfassend einen Neigungssensor (7), der ausgestaltet ist, um einen Neigungsparameter zu messen, der eine Neigung der Flasche (2) relativ zu einem absoluten räumlichen Referenzwert repräsentiert.

13. Vorrichtung (1) nach einem der vorhergehenden Ansprüche, wobei das Befestigungselement (4) ausgelegt ist, um eine Kappe der Flasche (2) abzudecken und zu verhindern, dass die Flasche geöffnet wird, ohne zuerst die Vorrichtung (1) zu entfernen.

14. Verfahren zur Überwachung eines flüssigen Lebensmittels, das in einer Flasche (2) enthalten ist, umfassend die folgenden Schritte:
- Vorbereiten einer Vorrichtung (1), die dauerhaft mit einer Flasche (2) gekuppelt werden kann, und Verbinden der Vorrichtung (1) mit der zu überwachenden Flasche (2) ;
- Einrichten der Vorrichtung (1), um eine ausschließliche Verknüpfung der Vorrichtung (1) mit der Flasche (2) herzustellen, indem ein Identifizierungscode in einem Speicher (8) der Vorrichtung (1) aufgezeichnet wird;
- Erfassen von Temperatur- und Lichtparametern, die jeweils eine Temperatur einer Umgebung, in der die Flasche (2) angeordnet ist, und eine Strahlungsstärke auf die Flasche (2) repräsentieren, wobei die Temperatur- und Lichtparameter jeweils über einen Temperatursensor (5) und einen Lichtsensor (6) erfasst werden, die in der Vorrichtung (1) integriert sind;
- Speichern der Temperatur- und Lichtparameter im Speicher (8);
- Annähern eines tragbaren elektronischen Geräts (17), das ausgelegt ist, um über drahtlose Signale Daten mit der Vorrichtung (1) auszutauschen;
- Übermitteln von Daten, die die Temperatur- und Lichtparameter repräsentieren, über eine in die Vorrichtung (1) integrierte Antenne (11) an das tragbare elektronische Gerät (17).

15. Flaschenkappe, umfassend eine Vorrichtung (1) nach einem oder mehreren der Ansprüche 1 bis 13, betriebswirksam verbunden mit der Wand der Kappe.

## Revendications

1. Dispositif (1) pour surveiller un produit alimentaire liquide contenu dans une bouteille (2), comprenant :
- une coque protectrice (3) ;
- un élément de fixation (4) configuré pour attacher la coque (3) de façon permanente à la bouteille (2) ;
- un capteur de température (5) logé dans la coque (3) et configuré pour mesurer un paramètre de température représentant une température d'un environnement dans lequel la bouteille (2) se trouve ;
- un capteur de luminosité (6) logé dans la coque (3) et configuré pour mesurer un paramètre de luminosité représentant une intensité de rayonnement sur la bouteille (2) ;
- une batterie d'alimentation (10) logée dans la coque (3) ;
- une mémoire de stockage de masse (8) logée dans la coque (3) ;
- un processeur (9) logé dans la coque (3) et relié à la mémoire (8), au capteur de température (5) et au capteur de luminosité (6), pour recevoir des valeurs des paramètres de température et de luminosité et pour les enregistrer dans la mémoire (8) ;
- au moins une antenne (11) reliée au processeur (9) et configurée pour échanger des données par des signaux sans fil d'entrée et de sortie vers le / à partir du dispositif (1).

2. Dispositif (1) selon la revendication 1, comprenant un élément d'activation (12) configuré pour interagir avec la bouteille (2) et mobile entre une position activée et une position désactivée, de sorte que lorsque le dispositif (1) est couplé à la bouteille (2), l'élément de désactivation est forcé à se mettre dans la position activée, et dans lequel l'élément d'activation (12) est relié au processeur (9).

3. Dispositif (1) selon la revendication 2, dans lequel le processeur est configuré pour activer ou désactiver le fonctionnement du capteur de température (5) et du capteur de luminosité (6) en fonction de la position de l'élément d'activation (12).

4. Dispositif (1) selon la revendication 2 ou 3, dans lequel la coque protectrice (3) comporte une cloison postérieure (3a) étant fonctionnellement en contact avec la bouteille (2) lorsque le dispositif (1) est fixé à la bouteille (2), et dans lequel l'élément d'activation (12) comprend un bouton poussoir rétractable dépassant du côté postérieur (3a) dans la position désactivée et un élément élastique configuré pour maintenir l'élément d'activation (12) dans la position désactivée lorsque le dispositif (1) n'est pas fixé à la bouteille (2).

5. Dispositif (1) selon l'une quelconque des revendications de 2 à 4, comprenant un capteur anti-effraction (15) configuré pour générer un signal d'alarme lorsque l'élément d'activation (12) passe de la position activée à la position désactivée.

6. Dispositif (1) selon l'une quelconque des revendications de 2 à 5, dans lequel, en l'absence d'une contrainte externe du dispositif et agissant sur celui-ci pour le forcer à se mettre dans la position activée, l'élément d'activation (12) est positionné dans la position désactivée, et dans lequel cette contrainte est constituée par la bouteille (2) elle-même lorsque le dispositif (1) est couplé à la bouteille.

7. Dispositif (1) selon l'une quelconque des revendications de 2 à 6, dans lequel le processeur (9) est programmé pour détecter un mouvement de l'élément d'activation (12) de la position activée à la position désactivée.

8. Dispositif (1) selon l'une quelconque des revendications précédentes, dans lequel le processeur (9) est programmé pour définir un état activé et un état désactivé et pour régler le dispositif à l'état activé ou désactivé en réponse, respectivement, à un signal d'activation ou de désactivation reçu par le processeur lui-même.

9. Dispositif (1) selon l'une quelconque des revendications précédentes, dans lequel la mémoire de stockage de masse (8) contient des données d'identification uniquement corrélées à la bouteille (2) et au produit alimentaire liquide contenu en son sein.

10. Dispositif (1) selon l'une quelconque des revendications précédentes, dans lequel l'au moins une antenne (11) est conçue pour communiquer des données à faible portée avec une technologie de communication en champ proche en réponse à un signal d'interrogation prédéterminé.

11. Dispositif (1) selon l'une quelconque des revendications précédentes, comprenant un circuit d'alimentation logé dans la coque (3) et pouvant être relié à travers un port série (14) à une antenne externe NFC pour recevoir une énergie électrique à travers un signal de fréquence radio et pour alimenter électriquement le processeur (9), le capteur de température (5), le capteur de luminosité (6) et/ou la batterie (10).

12. Dispositif (1) selon l'une quelconque des revendications précédentes, comprenant un capteur d'inclinaison (7) conçu pour mesurer un paramètre d'inclinaison représentant une inclinaison de la bouteille (2) par rapport à une référence absolue dans l'espace.

13. Dispositif (1) selon l'une quelconque des revendications précédentes, dans lequel l'élément de fixation (4) est configuré pour recouvrir un bouchon de la bouteille (2) et empêcher la bouteille d'être ouverte avant d'avoir d'abord retiré le dispositif (1).

14. Procédé pour surveiller un produit alimentaire liquide contenu dans une bouteille (2), comprenant les étapes suivantes :
- préparer un dispositif (1) pouvant être couplé en permanence à une bouteille (2) et reliant le dispositif (1) à la bouteille (2) à surveiller ;
- paramétrer le dispositif (1) pour établir une association unique du dispositif (1) à la bouteille (2) pour enregistrer un code d'identification dans une mémoire (8) du dispositif (1) ;
- acquérir des paramètres de température et de luminosité représentant respectivement une température d'un environnement dans lequel la bouteille (2) se trouve et une intensité du rayonnement sur la bouteille (2), dans lequel lesdits paramètres de température et de luminosité sont acquis à travers un capteur de température (5) et un capteur de luminosité (6) inclus, respectivement, dans le dispositif (1) ;
- enregistrer les paramètres de température et de luminosité dans la mémoire (8) ;
- approcher un appareil électronique portable (17) configuré pour échanger des données avec le dispositif (1) à travers des signaux sans fil ;
- transmettre, à travers une antenne (11) incluse dans le dispositif (1), des données représentant les paramètres de température et de luminosité à l'appareil électronique portable (17).

15. Bouchon de bouteille comprenant un dispositif (1) selon l'une ou plusieurs des revendications de 1 à 13, relié fonctionnellement à une cloison du bouchon lui-même.
